Europäisches Patentamt

European Patent Office

Office européen des brevets

(19)

(11) Numéro de publication: **0 465 350 B1**

(12) **FASCICULE DE BREVET EUROPEEN**

(45) Date de publication de fascicule du brevet: **14.12.94** (51) Int. Cl.⁵: **G01J 3/28**, G01J 3/06

(21) Numéro de dépôt: **91401821.3**

(22) Date de dépôt: **02.07.91**

(54) Installation de spectrométrie dispersive à détection multicanale perfectionnée.

(30) Priorité: **03.07.90 FR 9008407**

(43) Date de publication de la demande:
**08.01.92 Bulletin 92/02**

(45) Mention de la délivrance du brevet:
**14.12.94 Bulletin 94/50**

(84) Etats contractants désignés:
**DE GB IT NL SE**

(56) Documents cités:
**US-A- 4 326 802**
**US-A- 4 455 087**
**US-A- 4 523 845**

**APPLIED SPECTROSCOPY, vol. 44, no. 5, juin 1990, pages 776-782; P. KNOLL et al: "Improving spectroscopic techniques by a scanning multichannel method"**

**SOVIET INVENTIONS ILLUSTRATED, semaine E02, 24 février 1982, page 21, abrégé no. S03, A4097 E/02, Derwent Publications Ltd, Londres, GB; & SU-A-817 489**

**PATENT ABSTRACTS OF JAPAN, vol. 8, no. 169 (P-292)[1606], 4 août 1984;& JP-A-59 063 533 (YUNION) 11-04-1984**

(73) Titulaire: **DILOR**
**244, rue des Bois-Blancs**
**F-59000 Lille (FR)**

(72) Inventeur: **Delhaye, Michel**
**80, rue Thiers**
**F-59493 Villeneuve d'Ascq (FR)**
Inventeur: **Da Silva, Edouard**
**2bis, rue Saint-Sébastien**
**F-59000 Lille (FR)**
Inventeur: **Roussel, Bernard**
**12, rue Fleurie**
**F-59300 Valenciennes (FR)**

(74) Mandataire: **Plaçais, Jean-Yves et al**
**Cabinet Netter,**
**40, rue Vignon**
**F-75009 Paris (FR)**

EP 0 465 350 B1

## Description

L'invention concerne la spectrométrie dispersive à détection multicanale.

Elle trouve une application générale en spectrométrie instrumentale et notamment en spectrométrie d'absorption, d'émission, de diffusion, de fluorescence, et RAMAN etc.

On connait depuis longtemps des installations de spectrométrie dispersive à détection monocanale.

Généralement, ce genre d'installation comprend:

- une fente d'entrée éclairée par un faisceau de rayonnement électomagnétique à analyser;
- un étage disperseur avec une fente de sortie pour délivrer une image spectrale dispersée de ce faisceau, limitée à une bande spectrale choisie;
- un module de détection monocanale recevant ladite image spectrale à travers ladite fente de sortie ;et
- des moyens de traitement pour analyser les signaux perçus par le module de détection monocanale.

En pratique, le module de détection monocanale comprend des éléments détecteurs photoélectriques tels que des cellules, des photomultiplicateurs, ou des thermopiles.

Fonctionnellement, un seul élément spectral du rayonnement électromagnétique à analyser passe à travers la fente de sortie et en conséquence est détecté par le module de détection tion monocanale. Il s'ensuit qu'il est nécessaire de déplacer l'élément disperseur pour faire passer dans la fente de sortie chacun des autres éléments spectraux (US-A-4 326 802).

Or, avec l'avènement des éléments détecteurs intégrés tels que les barrettes de photodiodes et les dispositifs à transfert de charge couplés avantageusement avec des systèmes d'intensification d'images, la détection monocanale est maintenant souvent remplacée par la détection multicanale car dans cette dernière, l'image spectrale dispersée est projetée directement sur le module de détection multicanale, c'est-à-dire sans passer à travers une fente de sortie, ce qui permet une détection simultanée de plusieurs éléments spectraux du rayonnement électromagnétique sans modifier la configuration de l'installation (Applied spectroscopy, vol. 44, No 5, juin 1990, pages 776-782 ; P. KNOLL et Al "Improving spectroscopic techniques by scanning multichannel method").

Néanmoins, l'acquisition des signaux permettant l'obtention du spectre du rayonnement électromagnétique à analyser s'effectue lorsque l'image spectrale dispersée dudit rayonnement électromagnétique est fixe par rapport au module de détection multicanale, ce qui limite l'étendue du spectre aux dimensions géométriques du module de détection et fixe la résolution spectrale de l'installation à celles des éléments détecteurs.

De plus, lorsque qu'un système d'intensification d'images est couplé avec les éléments détecteurs, l'observation des spectres successifs s'effectue toujours sur les mêmes luminophores. Il s'ensuit que la durée de vie desdits luminophores détermine la résolution temporelle de l'installation.

De surcroît, le taux de lumière parasite dû à la diffusion de la lumière par l'élément disperseur ou les autres pièces optiques est plus élevé que celui des installations à détection monocanale. En effet en détection monocanale, ce taux est proportionnel à la surface des fentes d'entrée et de sortie dont les largeurs respectives sont généralement choisies très petites (de l'ordre de quelques dizaines de micromètres par exemple). Tandis qu'en détection multicanale, ce taux est proportionnel à la surface du module de détection (de l'ordre de quelques centimètres carrés) dans la mesure où l'image spectrale dispersée issue de l'étage disperseur est directement projetée sur le module de détection (il n'y a pas de fente de sortie en détection multicanale).

Enfin, le rapport signal sur bruit de fond de l'installation n'est pas satisfaisant notamment à cause des bruits dus au module de détection lui-même, des bruits induits par les perturbations extérieures, et des bruits de photons engendrés par l'illumination du module de détection par un fond continu de lumière parasite ou par des bandes spectrales parasites.

La présente invention a pour but de remédier à ces inconvénients.

Elle concerne une installation de spectrométrie dispersive à détection multicanale comprenant:

- une entrée pour un faisceau de rayonnement électromagnétique à analyser;
- des moyens de filtrage optique propres à recevoir le faisceau d'entrée, et à délivrer une image spectrale dispersée de ce faisceau, limitée à une bande spectrale choisie;
- un module de détection multicanale comprenant une pluralité d'éléments détecteurs, recevant ladite image spectrale; et
- des moyens de traitement, pour analyser les signaux perçus par ces éléments détecteurs.

Selon une définition générale de la présente invention, l'installation comprend en outre en combinaison:

- au moins un étage déflecteur;
- des premiers moyens de commande, pour commander l'étage disperseur en vue de définir ladite image spectrale dispersée, en fréquence centrale et en largeur de bande;

- des seconds moyens de commande, propres à commander le déplacement de l'image spectrale ainsi définie en fréquence centrale et en largeur de bande, en vue d'introduire ladite image spectrale ainsi définie dans l'étage déflecteur; et
- des troisièmes moyens de commande propres à déplacer l'image spectrale ainsi définie sur le module de détection multicanale;
- une unité de commande électronique propre à piloter les premiers, seconds et troisièmes moyens de commande et les moyens de traitement selon une pluralité de modes de fonctionnement, dont chacun comprend une commande conjointe de ladite bande spectrale choisie, des vitesses de déplacement de l'image spectrale sur l'étage déflecteur et sur le module de détection, et des paramètres des moyens de traitement, pour isoler le signal utile en coïncidence avec la bande spectrale choisie, selon une loi prédéterminée pour obtenir un grandissement choisi de l'image spectrale dispersée sur un jeu particulier d'éléments détecteurs.

Ce grandissement de l'image spectrale dispersée permet d'obtenir une étendue spectrale du rayonnement électromagnétique à analyser qui n'est plus limitée par les dimensions géométriques du module de détection.

De même, grâce à l'invention, la résolution spectrale de l'installation n'est plus limitée par les dimensions géométriques des éléments détecteurs.

En outre, la résolution temporelle de l'installation n'est plus assujettie à la durée de vie des luminophores du tube intensificateur d'images dans la mesure où l'observation des spectres successifs s'effectue maintenant sur des luminophores différents grâce au déplacement de l'image spectrale dispersée sur le module de détection.

De plus, le taux de lumière parasite dû à la diffusion de la lumière par les éléments disperseurs se trouve réduit par les moyens de filtrage optique qui sont à bande passante étroite.

Enfin, le rapport signal sur bruit de l'installation se trouve amélioré par la lecture électronique sélective des éléments détecteurs excités par l'image spectrale dispersée.

Selon un autre aspect de l'invention, l'adaptation des paramètres de la commande conjointe de la bande spectrale choisie, du déplacement de l'image spectrale, et des moyens de traitement est continue ce qui permet de faire varier continuement le grandissement de l'image spectrale dispersée sur le jeu particulier d'éléments détecteurs.

Selon encore un autre aspect de l'invention, l'adaptation des paramètres de la commande conjointe de la bande spectrale choisie, du déplacement de l'image spectrale, et des moyens de traitement est séquentielle, ce qui permet de faire varier séquentiellement le grandissement de l'image spectrale dispersée sur le jeu particulier d'éléments détecteurs.

Selon un mode de réalisation de l'invention, le grandissement de l'image spectrale dispersée constitue un étalement en dispersion de ladite image sur le jeu particulier d'éléments détecteurs.

Selon un autre mode de réalisation de l'invention, le grandissement de l'image spectrale dispersée constitue une contraction en dispersion de ladite image sur le jeu particulier d'éléments détecteurs.

En pratique, l'étage déflecteur possède au moins un élément optique disperseur du groupe constitué par les réseaux de diffraction, les prismes.

Selon une variante, l'étage déflecteur possède au moins un élément optique du groupe constitué par les lentilles, les miroirs plans, les miroirs sphériques ou asphériques, les systèmes holographiques, les fentes, les interféromètres.

Selon encore une autre variante, l'étage déflecteur possède au moins un élément optoélectronique du groupe constitué par les systèmes de déflection électronique à fente électronique d'entrée à largeur variable, les systèmes d'intensification des éléments détecteurs couplés le cas échéant avec des moyens d'obturation des éléments détecteurs, les caméras à balayage de fentes, les systèmes optiques à grandissement.

Avantageusement, l'étage déflecteur possèdant au moins un élément optoélectronique est logé dans le module de détection.

En pratique, le module de détection comprend N éléments détecteurs rangés en une ligne disposée parallèlement à la dispersion du faisceau de rayonnement électromagnétique à analyser et le grandissement de l'image spectrale dispersée sur le jeu particulier d'éléments détecteurs est parallèle à ladite dispersion du faisceau de rayonnement électromagnétique.

En variante, le module de détection comprend N éléments détecteurs rangés en m lignes disposées parallèlement à la dispersion du faisceau de rayonnement électromagnétique et p colonnes disposées perpendiculairement à la dispersion dudit faisceau et en ce que le grandissement de l'image spectrale dispersée est parallèle à ladite dispersion du faisceau de rayonnement électromagnétique sur les m'lignes du jeu particulier d'éléments détecteurs et perpendiculaire à ladite dispersion sur les p'colonnes du jeu particulier d'éléments détecteurs.

De préférence, les moyens optiques de filtrage comprennent des moyens séparateurs d'ordre propres à être commandés par l'unité de commande électronique.

D'autres caractéristiques et avantages de l'invention apparaîtront à la lumière de la description détaillée ci-après et des dessins annexés dans lesquels:

- la figure 1 représente schématiquement une installation de spectrométrie dispersive à détection multicanale selon l'invention;
- la figure 2 est une représentation schématique d'un masque optique défini par l'étage disperseur selon l'invention;
- la figure 3 est une représentation schématique d'un masque électronique défini par le module de détection selon l'invention en correspondance avec le masque optique de la figure 2;
- la figure 4 représente schématiquement un exemple d'installation de spectrométrie dispersive à détection multicanale selon l'invention avec un étage déflecteur du type réseau;
- la figure 5 illustre schématiquement la variation du grandissement de l'image spectrale dans une installation de la figure 4;
- la figure 6 représente schématiquement une installation de spectrométrie dispersive avec un étage déflecteur du type miroir tournant selon l'invention;
- la figure 7 illustre schématiquement la variation du grandissement de l'image spectrale dans une installation de la figure 6; et
- la figure 8 représente schématiquement une installation de spectrométrie dispersive avec un étage déflecteur du type électronique selon l'invention.

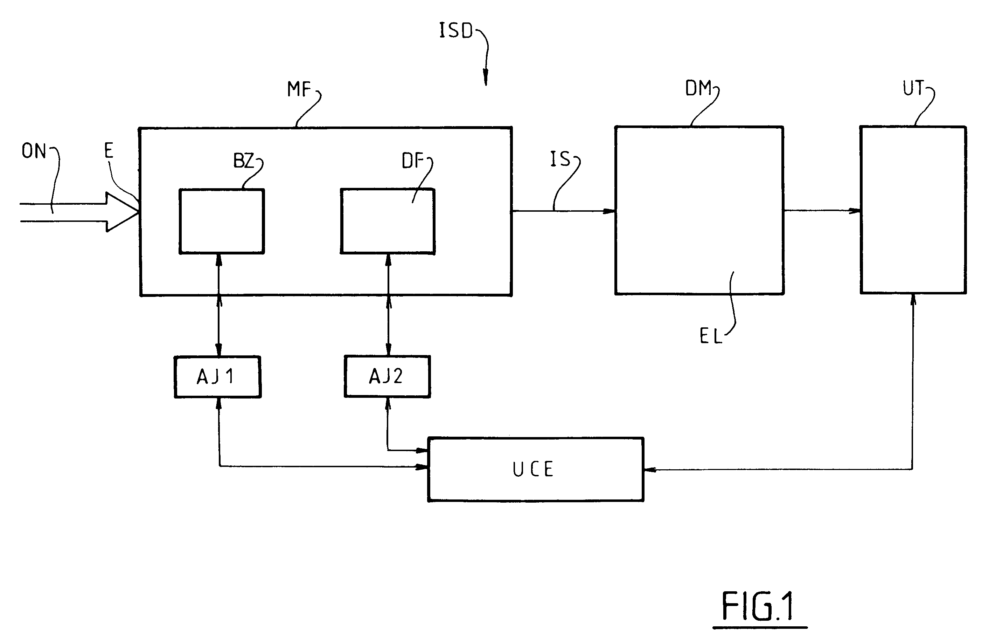

Sur la figure 1, la référence ISD désigne une installation de spectrométrie dispersive à détection multicanale selon l'invention.

De façon connue, l'installation ISD comprend:

- une entrée E pour un faisceau de rayonnement électromagnétique ON à analyser;
- des moyens de filtrage optique MF propres à recevoir le faisceau d'entrée ON, et à délivrer une image spectrale IS dispersée de ce faisceau, limitée à une bande spectrale BZ choisie;
- un module de détection multicanale DM comprenant une pluralité d'éléments détecteurs EL, recevant ladite image spectrale IS; et
- des moyens de traitement UT, pour analyser les signaux perçus par ces éléments détecteurs EL.

Selon une définition générale de l'invention, les moyens de filtrage optique MF sont munis d'au moins un étage déflecteur DF.

Aux moyens de filtrage optique MF sont associés:

. de premiers moyens de commande AJ1, pour définir ladite bande spectrale, en fréquence centrale et en largeur, et

. de seconds moyens de commande AJ2 propres à déplacer l'image spectrale IS sur le module de détection multicanale DM.

Il est prévu une unité de commande électronique UCE propre à piloter les premiers et seconds moyens de commande AJ1 et AJ2 et les moyens de traitement UT selon une pluralité de modes de fonctionnement, dont chacun comprend une commande conjointe de ladite bande spectrale choisie, du déplacement de l'image spectrale, et des moyens de traitement, pour utiliser sélectivement un jeu particulier d'éléments détecteurs.

Les demandeurs ont observé que les moyens de filtrage optique MF définissant la bande spectrale en fréquence centrale et en largeur correspondent à un masque optique isolant une fenêtre spectrale de dimensions choisies d'une part et que l'utilisation sélective d'un jeu particulier d'éléments détecteurs en concordance du masque optique ainsi défini correspond à un masque électronique ne prenant en compte que le jeu choisi d'éléments détecteurs d'autre part.

Par ailleurs, les demandeurs ont observé qu'à chaque mode de fonctionnement, l'unité de commande électronique UCE peut adapter des paramètres de la commande conjointe de la bande spectrale choisie (c'est-à-dire du masque optique), du déplacement de l'image spectrale, et des moyens de traitement UT (c'est-à-dire du masque électronique) selon une loi prédéterminée pour obtenir un grandissement choisi de l'image spectrale dispersée sur le jeu particulier d'éléments détecteurs EL.

Selon l'invention, ce grandissement choisi de l'image spectrale dispersée sur le jeu particulier d'éléments détecteurs améliore les performances d'une installation de spectrométrie à détection multicanale au niveau notamment de la sensibilité et de la rapidité de la lecture des signaux perçus par les éléments détecteurs.

Selon un autre aspect de l'invention, l'adaptation des paramètres de la commande conjointe de la bande spectrale choisie, du déplacement de l'image spectrale, et des moyens detraitement est continue ce qui permet de faire varier continuement le grandissement de l'image spectrale dispersée sur le jeu particulier d'éléments détecteurs.

Selon encore un autre aspect de l'invention, l'adaptation des paramètres de la commande conjointe de la bande spectrale choisie, du déplacement de l'image spectrale, et des moyens de traitement est séquentielle, ce qui permet de faire varier séquentiellement le grandissement de l'image spectrale dispersée sur le jeu particulier d'éléments détecteurs.

En d'autres termes, l'adaptation séquentielle des paramètres de commande permet de choisir des portions spectrales prédéterminées dont les images spectrales respectives peuvent avoir des grandissements différents selon l'invention et de mettre bout à bout ces images spectrales sur le module de détection. Cette adaptation séquentielle se prête bien à l'analyse de spectre compliqué présentant un grand nombre de raies.

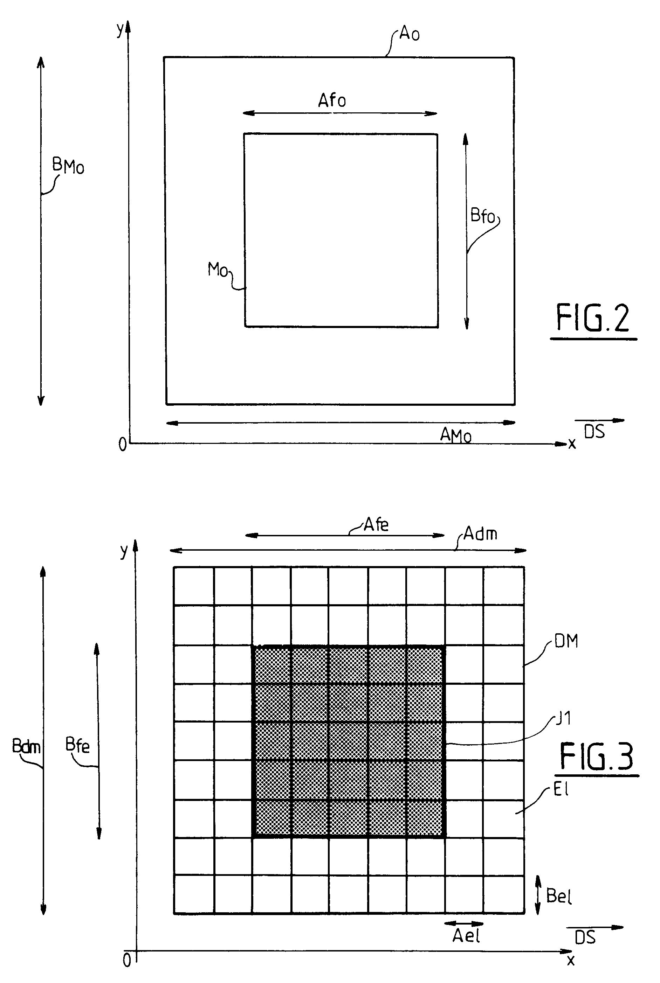

Nous faisons maintenant référence à la figure 2 sur laquelle nous avons représenté schématiquement un masque optique correspondant à la bande spectrale définie par les moyens de filtrage optique.

Le masque optique Mo est dessiné dans un parallélogramme Po possèdant une largeur Amo (selon l'axe des abscisses OX) et une hauteur Bmo (selon l'axe des ordonnées OY).

Par convention, la dispersion spectrale DS est parallèle à l'axe des abscisses OX et perpendiculaire à l'axe des ordonnées OY.

La fenêtre spectrale définie par le masque optique Mo possède une largeur Afo (selon l'axe des abscisses OX) et une hauteur Bfo (selon l'axe des ordonnées OY).

C'est sous le contrôle de l'unité de commande électronique UCE que les moyens de commande AJ1 ajustent les dimensions Afo et Bfo de la fenêtre spectrale, c'est-à-dire de la bande spectrale.

Il est à remarquer qu'en dehors des surfaces délimitées par la largeur Afo et la hauteur Bfo, le masque optique Mo est opaque aux rayonnements électromagnétiques tandis qu'il est transparent aux dits rayonnements électromagnétiques à l'intérieur dudit masque.

Nous faisons à nouveau référence à la figure 1.

Le module de détection multicanale DM est par exemple précédé d'un tube intensificateur d'image (non représenté) dans lequel les éléctrons émis par une photocathode recevant l'image spectrale sont accélérés et dirigés vers une galette à microcanaux réalisant une amplification par émission secondaire. Les faisceaux d'électrons secondaires sont accélérés et frappent un écran luminophore optiquement couplé aux éléments détecteurs.

Par exemple, les luminophores de la surface luminescente (non représentés)sont couplés aux éléments détecteurs EL du module de détection multicanale par l'intermédiaire d'un réseau de fibres optiques FO.

Le module de détection multicanale DM est suivi de moyens de traitement UT pilotés par l'unité de commande éléctronique UCE pour établir une pluralité de spectres de rayonnements électromagnétiques S en fonction des signaux perçus par le module de détection.

Par exemple, les moyens de traitement UT comprennent des moyens de mesure (non représentés) propres à traiter les signaux délivrés par les éléments détecteurs du module de détection en fonction de signaux de référence délivrés par une mémoire de référence (non représentée) propre à contenir une bibliothèque de spectres.

Le module de détection peut être monodimensionnel (non représenté) et comprendre N éléments détecteurs rangés en une ligne disposée parallèlement à la dispersion du faisceau de rayonnement électromagnétique à analyser.

Aves un tel détecteur monodimensionnel, le grandissement de l'image spectrale dispersée sur le jeu particulier d'éléments détecteurs est parallèle à ladite dispersion du faisceau de rayonnement électromagnétique.

Nous faisons maintenant référence à la figure 3 sur laquelle nous avons représenté un masque électronique défini par un module de détection bidimensionnel en correspondance avec le masque optique décrit en référence avec la figure 2.

Le module de détection bidimensionnel DM comprend N éléments détecteurs EL rangés en m lignes disposées parallèlement à la dispersion du faisceau de rayonnement électromagnétique DS et p colonnes disposées perpendiculairement à la dispersion dudit faisceau (ici m et p sont égaux à 9).

Les éléments détecteurs EL possèdent respectivement une largeur Ael et une hauteur Bel.

Le module de détection bidimensionnelle a une hauteur Bdm et une largeur Adm.

En correspondance au masque optique Mo décrit en référence à la figure 2, selon l'invention, il est associé un masque électronique utilisant sélectivement un jeu d'éléments détecteurs particuliers J1 (en grisé sur la figure 3) possédant une largeur totale Afe et une hauteur totale Bfe.

Il est à observer que le masque électronique permet de prendre en compte uniquement le jeu d'éléments détecteurs J1.

En pratique, il est associé à chaque masque optique un masque électronique utilisant sélectivement un jeu particulier d'éléments détecteurs.

Pour un détecteur bidimensionnel tel que décrit en référence à la figure 3, le grandissement de l'image spectrale dispersée est parallèle à ladite dispersion du faisceau de rayonnement électromagnétique sur les m'lignes (ici m' est égal à 5) du jeu particulier J1 d'éléments détecteurs et perpendiculaire à ladite dispersion sur les p'colonnes du jeu particulier J1 d'éléments détecteurs (ici p' est égal à 5).

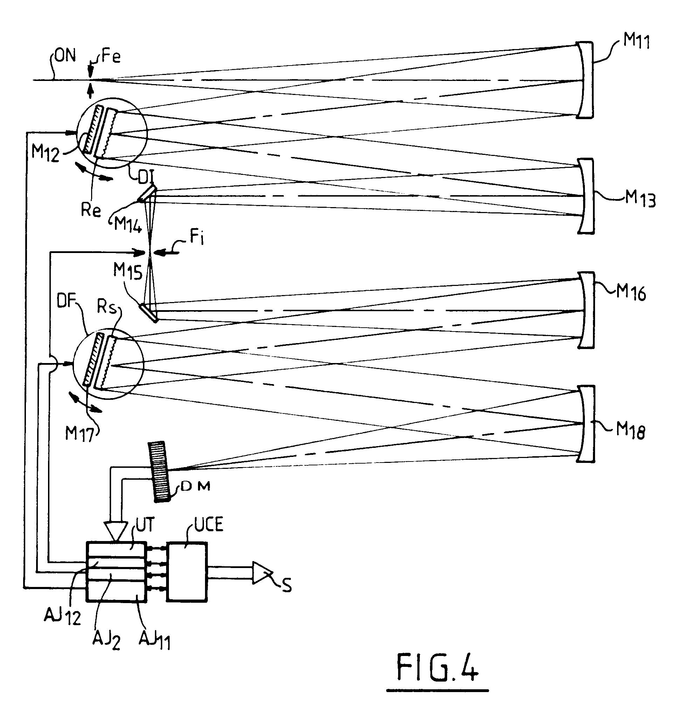

Nous faisons maintenant référence à la figure 4 sur laquelle est représentée un exemple d'installation selon l'invention avec un étage déflecteur du type réseau dispersif.

Une lentille (non représentée) focalise le rayonnement électromagnétique à analyser ON sur une fente d'entrée Fe.

Le faisceau d'entrée est reçu par un étage disperseur DI comprenant par exemple un réseau disperseur Re disposé entre deux miroirs M11 et M13. Avantageusement un miroir M12 est accolé au dos du réseau Re.

Un miroir M14 focalise l'image spectrale dispersée issue du miroir M13 sur une fente intermédiaire Fi dont la largeur est réglable pour choisir la largeur de la bande spectrale du rayonnement électromagnétique qui est transmise vers un étage déflecteur DF via un miroir M15.

L'étage déflecteur DF comprend par exemple un réseau disperseur Rs disposé entre deux miroirs M16 et M18. Avantageusement un miroir M17 est accolé au dos du réseau Rs.

Ici,la fente d'entrée Fe et la fente intermédiaire Fi se trouvent conjuguées optiquement les unes des autres.

Par ailleurs, la largeur de la fente d'entrée Fe vérifie une condition prédéterminée relative à la surface des éléments détecteurs du module de détection multicanale pour définir la résolution spectrale de l'installation.

Sous le contrôle de l'unité de commande électronique UCE, des moyens de commande AJ12 ajustent la largeur de la fente intermédiaire Fi ainsi que la position de celle-ci en vue de déterminer une bande spectrale choisie, c'est-à-dire les dimensions du masque optique Mo décrit en référence à la figure 2.

Ensuite, sous le contrôle de l'unité de commande électronique UCE, des moyens de commande AJ11 déplacent le réseau Re selon une vitesse controlée V1,ce qui permet de faire entrer dans l'étage déflecteur une image dispersée choisie.

Enfin, sous le contrôle de l'unité de commande électronique UCE, des moyens de commande AJ2 déplacent le réseau Rs selon une vitesse contrôlée V2 pour déplacer l'image spectrale par rapport au module de détection.

Il est à noter ici que les vitesses V1 et V2 correspondent aux vitesses de déplacement des images spectrales comptées dans le plan du module de détection.

Le cas échéant, sous le contrôle de l'unité de commande électronique UCE, les moyens de traitement UT déplacent le jeu particulier J1 selon une vitesse contrôlée V3.

Très avantageusement, l'unité de commande électronique UCE adapte des paramètres (par exemple V1, V2 et V3) de la commande conjointe de la bande spectrale (masque optique), du déplacement de l'image spectrale dispersée, et des moyens de traitement (masque électronique) selon une loi prédéterminée pour obtenir un grandissement choisi de l'image spectrale dispersée sur le jeu particulier J1 d'éléments détecteurs.

Il est à remarquer que l'invention se prête bien à l'utilisation de moyens optiques de filtrage MF équipés de moyens séparateurs d'ordre (non représentés).

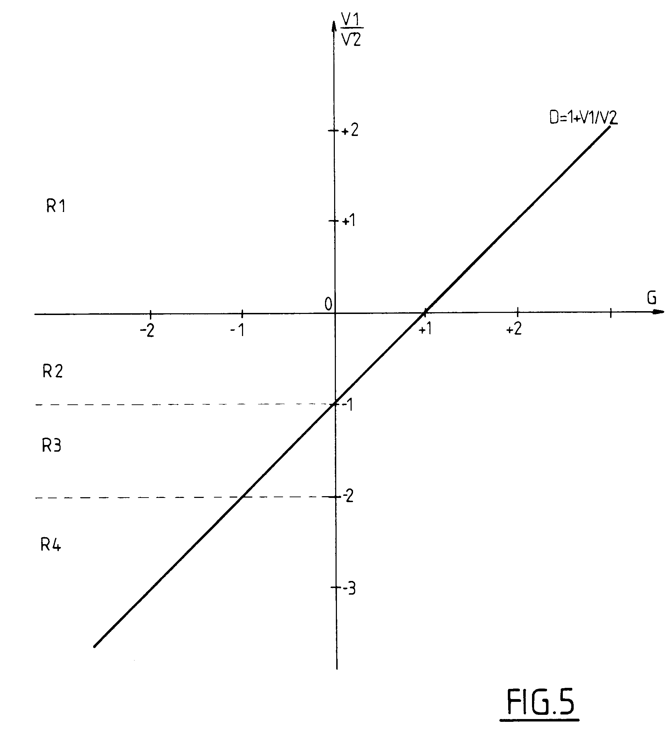

Nous faisons maintenant référence à la figure 5 qui illustre la variation du grandissement de l'image spectrale dispersée selon une loi prédéterminée dans une installation conforme à la figure 4.

Les composantes des vitesses V1, V2 et V3 selon l'axe des ordonnées OY sont prises nulles, c'est-à-dire qu'il n'y a pas de déflexion dans une direction perpendiculaire à la direction de la dispersion spectrale DS. La vitesse V3 du masque électronique est égale à la vitesse V1 du masque optique.

Pour simplifier, la largeur du masque optique Afo est égale à la largeur du masque électronique Afe, par conséquent les masques optiques et électroniques ont les mêmes dimensions et la même vitesse de déplacement (V1 = V3).

Les réseaux Re et Rs se déplacent respectivement selon des vitesses V1 et V2.

Sur l'axe des abscisses OX, nous avons représenté le grandissement G de l'image spectrale dispersée d'une part et sur l'I'axe des ordonnées OY, nous avons représenté le rapport des vitesses de déplacement V1/V2 d'autre part.

Dans les conditions mentionnées ci-avant, les demandeurs ont observé que la variation du grandissement G de l'image spectrale dispersée suit une droite D ayant pour équation D = 1 + V1/V2.

Plus précisément, pour un rapport V1/V2 positif, le grandissement G a une valeur supérieure à 1 (R1), c'est-à-direqu'il constitue un étalement de l'image spectrale dispersée sur le jeu J1.

Pour un rapport V1/V2 compris entre -1 et 0, le grandissement G a une valeur comprise entre 0 et 1 (R2), c'est-à-dire qu'il constitue une compression de l'image spectrale dispersée sur le jeu J1.

Pour un rapport V1/V2 compris entre -2 et -1, le grandissement G a une valeur comprise entre 0 et -1 (R3); c'est-à-dire qu'il constitue une compression avec inversion de la dispersion.

Pour un rapport V1/V2 inférieur à -2, le grandissement G a une valeur inférieur à -1 (R4); c'est-à-dire qu'il constitue un étalement de l'image spectrale dispersée sur le jeu J1.

Très avantageusement, le grandissement G réduit le taux de lumière parasite et les bandes correspondant aux images parasites dus à la diffusion par les disperseurs et les surfaces optiques ainsi que les bruits intrinsèques ou induits dus aux zones non utilisées du détecteur et aux bruits de photons liés au fond continu et aux diffusions parasites de l'optique.

Très avantageusement, le grandissement G remédie aux inconvénients dus à la structure discrète des éléments détecteurs du module de détection.

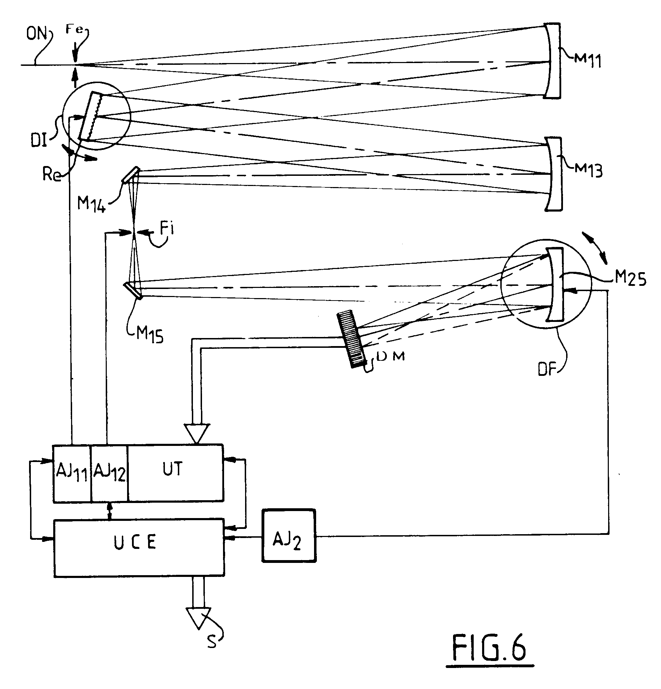

Nous faisons maintenant référence à la figure 6 sur laquelle est représentée un exemple d'installation selon l'invention avec un étage déflecteur du type miroir.

Nous retrouvons sur cette figure les éléments essentiels de la figure 4, elle n'en diffère que par la substitution de l'étage déflecteur du type réseau dispersif par un étage déflecteur DF du type miroir M25.

Sous le contrôle de l'unité de commande électronique UCE, les moyens de commande AJ2 déplacent le miroir M25 selon une vitesse contrôlée V2 pour déplacer l'image spectrale par rapport au module de détection DM.

Il est à remarquer que lorsque le réseau Re est remplacé par le miroir M25, la résolution finale ne bénéficie pas de la dispersion de l'étage déflecteur, elle est donc limitée par la diffraction et la largeur des fentes de l'étage dispersif seul.

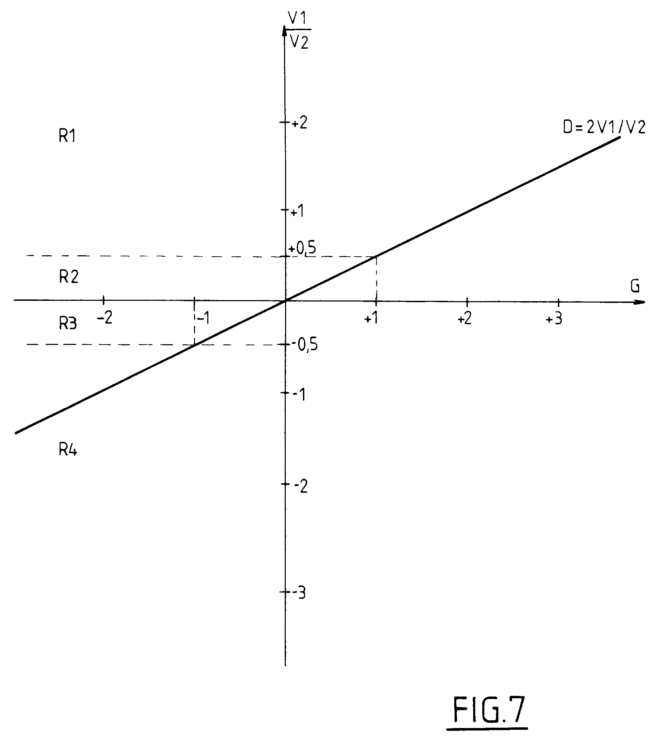

Nous faisons maintenant référence à la figure 7 qui illustre la variation du grandissement de l'image spectrale dispersée selon une loi prédéterminée dans une installation conforme à la figure 6.

Sur l'axe des abscisses OX, nous avons représenté le grandissement G de l'image spectrale dispersée d'une part et le rapport des vitesses de déplacement V1/V2 d'autre part.

Dans les conditions mentionnées ci-avant, les demandeurs ont observé que la variation du grandissement G de l'image spectrale dispersée suit une droite D ayant pour équation $D = 2V1/V2$.

Plus précisément, pour un rapport V1/V2 supérieur à 0,5, le grandissement G a une valeur supérieure à 1 (R1), c'est-à-dire qu'il constitue un étalement de l'image spectrale dispersée sur le jeu J1.

Pour un rapport V1/V2 compris entre 0 et 0,5; le grandissement G a une valeur comprise entre 0 et 1 (R2), c'est-à-dire qu'il constitue une compression de l'image spectrale dispersée sur le jeu J1.

Pour un rapport V1/V2 compris entre -0,5 et 0; le grandissement G a une valeur comprise entre 0 et -1 (R3); c'est-à-dire qu'il constitue une compression avec inversion de la dispersion.

Pour un rapport V1/V2 inférieur à -0,5; le grandissement G a une valeur inférieur à -1 (R4); c'est-à-dire qu'il constitue un étalement de l'image spectrale dispersée sur le jeu J1.

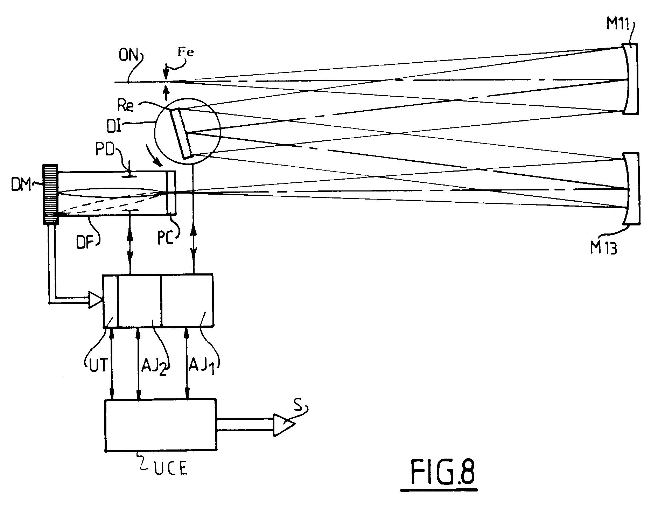

Nous faisons maintenant référence à la figure 8 sur laquelle est représentée un exemple d'installation selon l'invention avec un étage déflecteur du type optoélectronique.

Nous retrouvons sur cette figure les éléments essentiels des figures 4 et 5, elle n'en diffère que par la substitution de l'étage déflecteur du type réseau dispersif ou du type miroir par un étage déflecteur DF du type optoélectronique.

Le module de détection multicanale DM est précédé d'un étage déflecteur DF comprenant une photocathode PC recevant l'image spectrale dispersée délivrée par l'étage disperseur DI directement via le miroir M13.

Les électrons sont accélérés et dirigés par l'intermédiaire de plaques de deflexion PD vers une galette à microcanaux ( non représentée) réalisant une amplification par émission secondaire. Les faisceaux d'électrons secondaires sont accélérés et frappent un écran luminophore optiquement couplé aux éléments détecteurs.

Sous le contrôle de l'unité de commande électronique UCE, les moyens de commande AJ2 modifient les potentiels des plaques de deflexion électronique PD selon une vitesse contrôlée V2 pour déplacer l'image spectrale par rapport au module de détection DM.

Il y a lieu de remarquer qu'avec une déflexion selon l'axe des ordonnées OY non nulle, il est possible de réaliser une obturation rapide des éléments détecteurs, ce qui permet d'améliorer la résolution temporelle d'une installation spectrométrique.

Cette amélioration est intéressante lorsque la déflexion est du type optoélectronique comme décrit en référence à la figure 8 car elle permet d'éviter l'effet dit de "trainage" dû à la durée de vie de luminescence des luminophores.

Il est à remarquer que lorsque les largeurs de fenêtres de transmission des masques optiques Mo et électronique Me sont très supérieures à la largeur Ael d'un élément détecteur EL du module de détection DM, et où la vitesse de déplacement V2 de l'étage déflecteur DF est égale à 0, la fenêtre spectrale isolée par le masque optique Mo de l'étage disperseur DI se déplace à la vitesse V1 pour faire entrer dans l'étage déflecteur une image spectrale dispersée qui éclaire de façon fixe un jeu particulier d'éléments détecteurs J1.

Dans ce cas, si les lois de dispersion et de déplacement sont identiques, le spectre obtenu a la même dispersion et la même résolution spectrale qu'en fonctionnement classique, mais le taux de lumière parasite est réduit proportionnellement aux surfaces des masques optique Mo et électronique J1.

Dans le cas où la vitesse de déplacement V2 du réseau Rs de l'étage déflecteur est non nulle, il apparaît que pendant que la fenêtre spectrale isolée par le masque optique Mo se déplace dans le spectre à la vitesse V1, les images spectrales dispersées se déplacent alors sur le module de détection DM à la vitesse V2. Il peut en résulter un mélange des différentes radiations reçues par chacun des éléments détecteurs du module de détection, ce qui peut brouiller les spectres.

Cependant, il est possible alors de remédier à cela en remplaçant les déplacements linéaires et/ou les rotations continues des éléments optiques des étages dispersif et déflecteur selon des vitesses contrôlées V1 et V2 par des déplacements discontinus, synchronisés avec les moyens de traitement UT des signaux.

Par exemple, les différentes fractions de spectre sont analysées pas à pas en différents cycles de lecture sans superposition optique, et les signaux correspondants à chacune des lectures du détecteur sont mis en mémoire séparément par les moyens de traitement UT.

Un traitement informatique ultérieur permet de reconstituer un spectre composite prenant en compte l'ensemble des données ainsi obtenues.

Cette opération conduit à plusieurs améliorations car l'échantillonnage en plusieurs i points pour chacune des r périodes d'intégration successives, fournit un ensemble de ir mesures d'intensité.

Si le pas de déplacement q entre chacune des intégrations est inférieur à la largeur Ael d'un élément détecteur EL, l'échantillonnage des profils de raies spectrales sur un plus grand nombre de points permet de réduire la perte de résolution introduite pas la structure discrète du détecteur.

Dans le cas idéal, la résolution spectrale est alors améliorée d'un facteur Ael/q.

Si le pas de déplacement q entre chaque intégration est compris entre la largeur d'un élément détecteur Ael et celle du module de détection, la reconstitution par juxtaposition des différentes partitions du spectre conduit à l'élargissement du champ spectral d'une part et au lissage des légères différences de sensibilité entre les éléments détecteurs du module de détection d'autre part.

En outre, les effets de vignettage optique introduisant une variation d'intensité des bandes entre le centre et le bord du champ sont réduits.

Nous avons vu que l'adaptation des vitesses V1, V2, et V3 de la commande conjointe de la bande spectrale (masque optique), du déplacement de l'image spectrale et des moyens de traitement (masque électronique) s'effectue selon une direction parallèle à la dispersion spectrale DS d'une part, et selon une direction perpendiculaire à la dispersion spectrale DS d'autre part.

Une combinaison de ces deux adaptations permet de réaliser n'importe quel déplacement relatif des images spectrales dispersées dans le plan du module de détection.

Avantageusement, les détecteurs à transfert de charge permettent d'effectuer l'équivalent de ces deux adaptations selon les directions OX et OY par transfert de trames ou transfert de lignes par voie purement électronique.

Dans le cas où la composante horizontale (OX) de la vitesse de déplacement V3 du masque optique est différente de sa composante verticale (OY), les déplacements des masques électroniques sont alors discontinus et synchronisés avec les périodes d'obturation du module de détection.

De préférence, le choix des pas de déplacement sur l'axe Ox parallèle à la dispersion spectrale, correspond à un découpage du spectre optique en zones spectrales juxtaposées. De son côté, le déplacement sur l'axe perpendiculaire à la dispersion spectrale permet de mettre en mémoire les zones spectrales sur des bandes parallèles de la matrice d'éléments détecteurs.

Il est possible d'envisager des déplacements continus du masque électronique lorsque la hauteur du masque électronique est du même ordre que la hauteur d'un élément détecteur. Les spectres apparaissent alors sous forme de bande inclinée.

Dans un exemple de fonctionnement dit "de haute résolution", les fentes d'entrée Fe, et intermédiaire Fi sont choisies égales et de faible largeur, par exemple de l'ordre de quelques dizaines de micromètres. Le masque optique Mo isole donc une fenêtre spectrale étroite, dont la largeur n'est limitée ici que par la diffraction.

Le réseau disperseur Re (avantageusement l'étage disperseur comprend deux réseaux disperseurs) est déplacé par rotation à une vitesse angulaire V1, ce qui produit un déplacement de la fenêtre isolée par le masque optique Mo, parallèle à la dispersion DS, selon V1 dans le plan du module de détection.

Le réseau déflecteur Rs est déplacé par rotation, ce qui produit un déplacement des images spectrales sur le module de détection à une vitesse V2, parallèlement à la dispersion spectrale et dans le même sens que la vitesse V1.

Il en résulte que l'image du spectre se reconstitue séquentiellement dans le plan du détecteur, qui ne reçoit à chaque instant, qu'une image étroite correspondant à la largeur de la bande étroite définie par le masque optique Mo.

Par conséquent, la dispersion apparente de l'installation selon l'invention est augmentée par rapport à la dispersion apparente d'une installation classique dans laquelle les éléments optiques sont fixes lors de l'acquisition des signaux.

En outre, la résolution spectrale selon l'invention n'est pas limitée par la structure discrète du module de détection car les profils de raies peuvent être étalés à volonté sur un nombre d'éléments détecteurs plus élevé. De surcroît, l'échantillonnage se fait sur un nombre plus grand de points.

En définitive, la résolution spectrale de l'installation n'est limitée que par la fonction des fentes d'entrée et intermédiaire.

En conclusion, l'installation selon l'invention permet d'approcher la résolvance intrinsèque théorique des réseaux disperseurs.

Bien entendu, l'invention n'est pas limitée au mode de réalisation décrit, mais s'étend au contraire à toute variante incluse dans le cadre des revendications ci-après.

## Revendications

1. Installation de spectrométrie, du type comportant:
   - une entrée (Fe) pour un faisceau de rayonnement électromagnétique (ON) à analyser;
   - des moyens de filtrage optique (MF) propres à recevoir le faisceau d'entrée et comprenant au moins un étage disperseur propre à délivrer une image spectrale dispersée de ce faisceau, limitée à une bande spectrale (BZ) choisie;
   - un module de détection (DM) multicanale comprenant une pluralité d'éléments détecteurs (EL), recevant ladite image spectrale; et
   - des moyens de traitement (UT), pour analyser les signaux perçus par ces éléments détecteurs;
   caractérisée en ce que l'installation comprend en outre en combinaison :
   - au moins un étage déflecteur(DF);
   - des premiers moyens de commande (AJ11), pour commander l'étage disperseur en vue de définir ladite image spectrale dispersée, en fréquence centrale et en largeur de bande,
   - des seconds moyens de commande (AJ12), propres à commander le déplacement de l'image spectrale ainsi définie en fréquence centrale et en largeur de bande, en vue d'introduire ladite image spectrale ainsi définie dans l'étage déflecteur,
   - des troisièmes moyens de commande (AJ2), propres à déplacer l'image spectrale ainsi définie sur le module de détection (DM) multicanale;
   - une unité de commande électronique (UCE) propre à piloter les premiers (AJ1), seconds (AJ12), troisièmes (AJ2) moyens de commande et les moyens de traitement (UT) selon une pluralité de modes de fonctionnement, dont chacun comprend une commande conjointe de ladite bande spectrale choisie, des vitesses de déplacement de l'image spectrale sur l'étage déflecteur et sur le module de détection, et des paramètres des moyens de traitement pour isoler le signal utile en coincidence avec la bande spectrale choisie, selon une loi prédéterminée pour obtenir un grandissement choisi de l'image spectrale analysé sur un jeu particulier d'éléments détecteurs.

2. Installation selon la revendication 1, caractérisée en ce que l'adaptation des paramètres de la commande conjointe de la bande spectrale choisie, du déplacement de l'image spectrale, et des moyens de traitement est continue ce qui permet de faire varier continûment le grandissement choisi de l'image spectrale sur le jeu particulier d'éléments détecteurs.

3. Installation selon la revendications 1, caractérisée en ce que l'adaptation des paramètres de la commande conjointe de la bande spectrale choisie, du déplacement de l'image spectrale, et des moyens de traitement est séquentielle, ce qui permet de faire varier séquentiellement le grandissement choisi de l'image spectrale sur le jeu particulier d'éléments détecteurs.

4. Installation selon l'une quelconque des revendications précédentes, caractérisée en ce que le grandissement choisi de l'image spectrale constitue un étalement en dispersion de ladite image spectrale sur le jeu particulier d'éléments détecteurs.

5. Installation selon l'une quelconque des revendications 1 à 3, caractérisée en ce que le grandissement choisi de l'image spectrale constitue une contraction en dispersion de ladite image sur le jeu particulier d'éléments détecteurs.

6. Installation selon l'une quelconque des revendications précédentes, caractérisée en ce que l'étage déflecteur (DF) possède au moins un élément optique disperseur du groupe constitué par les réseaux de diffraction, les prismes.

7. Installation selon l'une quelconque des revendications 1 à 5, caractérisée en ce que l'étage déflecteur (DF) possède au moins un élément optique du groupe constitué par les lentilles, les miroirs plans, les miroirs sphériques ou asphériques, les systèmes holographiques, les fentes, les interféromètres.

8. Installation selon l'une quelconque des revendications 1 à 5, caractérisée en ce que l'étage déflecteur (DF) possède au moins un élément optoélectronique du groupe constitué par les systèmes d'intensification des éléments détecteurs couplés le cas échéant avec des moyens d'obturation des éléments détecteurs,les caméras à balayage de fentes,les systèmes optiques à grandissement.

**9.** Installation selon la revendication 8, caractérisée en ce que l'étage déflecteur (DF) est logé dans le module de détection (DM).

**10.** Installation selon l'une quelconque des revendications précédentes, caractérisée en ce que le module de détection (DM) comprend N éléments détecteurs (EL) rangés en une ligne disposée parallèlement à la dispersion du faisceau de rayonnement électromagnétique à analyser et en ce que le grandissement choisi de l'image spectrale sur le jeu particulier d'éléments détecteurs est parallèle à ladite dispersion du faisceau de rayonnement électromagnétique.

**11.** Installation selon l'une quelconque des revendications 1 à 9, caractérisée en ce que le module de détection (DM) comprend N éléments détecteurs (EL) rangés en m lignes disposées parallèlement à la dispersion du faisceau de rayonnement électromagnétique et p colonnes disposées perpendiculairement à la dispersion dudit faisceau et en ce que le grandissement choisi de l'image spectrale sur les m' lignes particulières et p'colonnes particulières du jeu particulier d'éléments détecteurs est parallèle à la dispersion du faisceau de rayonnement sur lesdites m'lignes particulières et perpendiculaire à la dispersion du faisceau de rayonnement sur lesdites p'colonnes particulières.

**12.** Installation selon l'une quelconque des revendications précédentes, caractérisée en ce que les moyens optiques de filtrage comprennent des moyens séparateurs d'ordre propres à être commandés par l'unité de commande électronique (UCE).

**Claims**

**1.** Spectrometry installation of the type comprising:
   - an inlet (Fe) for an electromagnetic radiation beam (ON) to be analysed;
   - optical filtering means (MF) which can receive the inlet beam and comprising at least one disperser stage which can deliver a dispersed spectral image of this beam, restricted to a selected spectral band (BZ);
   - a multichannel detection module (DM) comprising a plurality of detector elements (EL), receiving the spectral image; and
   - processing means (UT) for analysing the signals detected by these detector elements;
   characterised in that the installation further comprises in combination:
   - at least one deflector stage (DF);
   - first control means (AJ11) for controlling the disperser stage in order to define the dispersed spectral image in terms of central frequency and band width;
   - second control means (AJ12) for controlling the displacement of the spectral image thus defined in terms of central frequency and band width in order to introduce the spectral image thus defined in the deflector stage;
   - third control means (AJ2) for displacing the spectral image thus defined on the multichannel detection module (DM);
   - an electronic control unit (UCE) for controlling the first (AJ1), second (AJ12), third (AJ2) control means and the processing means (MF) according to a plurality of operating modes, each of which comprises a joint control of the selected spectral band, of the displacement speeds of the spectral image on the deflector stage and on the detection module, and of the processing means parameters for isolating the useful signal coinciding with the selected spectral band, according to a predetermined law in order to bring about a selected enlargement of the analysed spectral image on a particular set of detector elements.

**2.** Installation according to Claim 1, characterised in that the adaptation of the joint control parameters of the selected spectral band, of the displacement of the spectral image and of the processing means is continuous which enables the selected enlargement of the spectral image on the particular set of detector elements to be varied continuously.

**3.** Installation according to Claim 1, characterised in that the adaptation of the joint control parameters of the selected spectral band, of the displacement of the spectral image and of the processing means is sequential, which enables the selective enlargement of the spectral image on the particular set of detector elements to be varied sequentially.

**4.** Installation according to any one of the preceding claims, characterised in that the selected enlargement of the spectral image constitutes an expansion in dispersion of the spectral image over the particular set of detector elements.

5. Installation according to any one of Claims 1 to 3, characterised in that the selected enlargement of the spectral image constitutes a contraction in dispersion of the image on the particular set of detector elements.

6. Installation according to any one of the preceding claims, characterised in that the deflector stage (DF) has at least one optical dispersal element of the group consisting of diffraction gratings, and prisms.

7. Installation according to any one of Claims 1 to 5, characterised in that the deflector stage (DF) has at least one optical element of the group consisting of lenses, plane mirrors, spherical or aspherical mirrors, holographic systems, slits and interferometers.

8. Installation according to any one of Claims 1 to 5, characterised in that the deflector stage (DF) has at least one optoelectronic element of the group consisting of detector element intensification systems if necessary coupled with detector element occluding means, slit scanning cameras and optical enlarging systems.

9. Installation according to Claim 8, characterised in that the deflector stage (DF) is housed in the detection module (DM).

10. Installation according to any one of the preceding claims, characterised in that the detection module (DM) comprises N detector elements (EL) arranged in a line disposed parallel to the dispersion of the electromagnetic radiation beam to be analysed; and in that the selected enlargement of the spectral image over the particular set of detector elements is parallel to the dispersion of the electromagnet radiation beam.

11. Installation according to any one of Claims 1 to 9, characterised in that the detection module (DM) comprises N detector elements (EL) arranged in m lines disposed parallel to the dispersion of the electromagnetic radiation beam and p columns disposed perpendicular to the dispersion of the beam; and in that the selected enlargement of the spectral image on the particular m' lines and particular p' columns of the particular set of detector elements is parallel to the dispersion of the radiation beam over the particular m' lines and perpendicular to the dispersion of the radiation beam over the particular p' columns.

12. Installation according to any one of the preceding claims, characterised in that the optical filtering means comprise order separator means which can be controlled by the electronic control unit (UCE).

**Patentansprüche**

1. Spektrometer-Einrichtung des Typs mit:
   - einem Eingang (Fe) für ein zu analysierendes elektromagnetisches Strahlenbündel (ON);
   - optischen Filtermitteln (MF), die für den Empfang des Eingangsstrahls geeignet sind und zumindest eine Dispersionsstufe besitzen, die für die Lieferung eines auf ein gewähltes Spektralband (BZ) beschränkten aufgespaltenen Spektralbildes geeignet ist;
   - einem Vielkanal-Detektormodul (DM) mit einer Vielzahl von Detektorelementen (EL), die das genannte Spektralbild empfangen;
   - und Verarbeitungsmitteln (UT) zum Analysieren der von den Detektorelementen erfaßten Signale;
   
   dadurch gekennzeichnet, daß diese Einrichtung in Kombination umfaßt:
   - zumindest eine Ablenkstufe (DF);
   - erste Steuerungsmittel (AJ11) zur Steuerung der Dispersionsstufe im Hinblick auf die Definition des genannten gestreuten Spektralbildes bezüglich der Mittenfrequenz und der Bandbreite;
   - zweite Steuerungsmittel (AJ12), die für die Steuerung der Verschiebung des hinsichtlich der Mittenfrequenz und der Bandbreite solchermaßen definierten Spektralbildes im Hinblick auf die Einführung des so definierten Spektralbildes in die Ablenkstufe geeignet sind;
   - dritte Steuerungsmittel (AJ2), die für die Verschiebung des solchermaßen definierten Spektralbildes an dem Vielkanal-Detektormodul (DM) geeignet sind;
   - eine elektronische Steuerungseinheit (UCE), die für die Pilotsteuerung der ersten (AJ1), zweiten (AJ12), dritten (AJ2) Steuerungsmittel und der Verarbeitungsmittel (UT) gemäß einer Vielzahl von Funktionsmodi geeignet ist, deren jeder eine gemeinsame Steuerung des gewählten Spektralbandes, der Verschiebungsgeschwindigkeiten des Spektralbildes an der Ablenkstufe und an dem Detektormodul und der Parameter der Verarbeitungsmittel umfaßt zum Isolieren des Nutzsignals in Übereinstimmung mit dem gewählten Spektralband gemäß einem vorgegebenen Gesetz zum Erreichen einer gewählten Vergrößerung des analysierten Spektralbildes an einer speziellen Gruppe von Detektorelementen.

2. Einrichtung nach Anspruch 1, dadurch gekennzeichnet, daß die Anpassung der Parameter der gemeinsamen Steuerung des gewählten Spektralbandes, der Verschiebung des Spektralbildes und der Verarbeitungsmittel stetig erfolgt, wodurch die gewählte Vergrößerung des Spektralbildes an der speziellen Detektorelementgruppe stetig variiert werden kann.

3. Einrichtung nach Anspruch 1, dadurch gekennzeichnet, daß die Anpassung der Parameter der gemeinsamen Steuerung des gewählten Spektralbandes, der Verschiebung des Spektralbildes und der Verarbeitungsmittel sequentiell erfolgt, wodurch die gewählte Vergrößerung des Spektralbildes an der speziellen Detektorelementgruppe sequentiell variiert werden kann.

4. Einrichtung nach einem der vorhergehenden Ansprüche, dadurch gekennzeichnet, daß die gewählte Vergrößerung des Spektralbildes eine Dehnung in Dispersionsrichtung des genannten Spektralbildes an der speziellen Detektorelementgruppe bildet.

5. Einrichtung nach einem der Ansprüche 1 bis 3, dadurch gekennzeichnet, daß die gewählte Vergrößerung des Spektralbildes eine Kontraktion in Dispersionsrichtung des genannten Bildes an der speziellen Detektorelementgruppe bildet.

6. Einrichtung nach einem der vorhergehenden Ansprüche, dadurch gekennzeichnet, daß die Ablenkstufe (DF) zumindest ein optisches Dispersionselement der durch die Beugungsgitter und die Prismen gebildeten Gruppe besitzt.

7. Einrichtung nach einem der Ansprüche 1 bis 5, dadurch gekennzeichnet, daß die Ablenkstufe (DF) zumindest ein optisches Element der durch die Linsen, Planspiegel, sphärischen oder asphärischen Spiegel, Holographiesysteme, Schlitze und Interferometer gebildeten Gruppe besitzt.

8. Einrichtung nach einem der Ansprüche 1 bis 5, dadurch gekennzeichnet, daß die Ablenkstufe (DF) zumindest ein optoelektronisches Element der Gruppe besitzt, die durch die gegebenenfalls mit Verschlußmitteln der Detektorelemente gekoppelten Verstärkungssysteme der Detektorelemente, die Kameras mit Schlitzabtastung und die optischen Vergrößerungssysteme gebildet ist.

9. Einrichtung nach Anspruch 8, dadurch gekennzeichnet, daß die Ablenkstufe (DF) in dem Detektormodul (DM) untergebracht ist.

10. Einrichtung nach einem der vorhergehenden Ansprüche, dadurch gekennzeichnet, daß das Detektormodul (DM) N Detektorelemente (EL) umfaßt, die in einer parallel zur Dispersion des zu analysierenden elektromagnetischen Strahlenbündels verlaufenden Reihe angeordnet sind, und daß die gewählte Vergrößerung des Spektralbildes an der speziellen Detektorelementgruppe parallel zur genannten Dispersion des elektromagnetischen Strahlenbündels liegt.

11. Einrichtung nach einem der Ansprüche 1 bis 9, dadurch gekennzeichnet, daß das Detektormodul (DM) N Detektorelemente (EL) umfaßt, die in parallel zur Dispersion des elektromagnetischen Strahlenbündels verlaufenden m Reihen und in senkrecht zur Dispersion des Strahlenbündels verlaufenden p Spalten angeordnet sind, und daß die gewählte Vergrößerung des Spektralbildes an den speziellen m' Reihen und und den speziellen p' Spalten der speziellen Detektorelementgruppe parallel zur Dispersion des Strahlenbündels an den genannten speziellen m' Reihen und senkrecht zur Dispersion des Strahlenbündels an den genannten speziellen p' Spalten liegt.

12. Einrichtung nach einem der vorhergehenden Ansprüche, dadurch gekennzeichnet, daß die optischen Filtermittel Mittel zum Trennen der Ordnungen umfassen, die für eine Steuerung durch die elektronische Steuereinheit (UCE) geeignet sind.

FIG.1

FIG.2

FIG.3

FIG.4

FIG.5

FIG.6

FIG.7

FIG.8